# EUROPEAN PATENT APPLICATION

(11) **EP 3 056 377 A1**
(43) Date of publication of application: **17.08.2016**
(21) Application number: 14851816.0
(22) Date of filing: 05.08.2014
(51) Int. Cl.: B60L 11/18, H02J 50/00, H01Q 9/04

(54) **WIRELESS POWER TRANSFER DEVICE**

(30) Priority: 11.10.2013 ES 201331500
(71) Applicant: Universitat Politècnica de València, 46022 Valencia (ES)
(72) Inventor: CARBONELL OLIVARES, Jorge Juan, E-46022 Valencia (ES); DÍAZ RUBIO, Ana, E-46022 Valencia (ES); SÁNCHEZ-DEHESA MORENO-CID, José, E-46022 Valencia (ES); TORRENT MARTI, Daniel, E-46022 Valencia (ES)
(74) Representative: Pons
(86) International application number: PCT/ES2014/070641
(87) International publication number: WO 2015/052361

(57) **Abstract**

The invention relates to a device that can be used to transfer power tirelessly, which is based on at least two resonators comprising photonic crystals defined by multiple layers of two different materials disposed concentrically and producing a circular sandwich-type structure. In one of the preferred embodiments of the device of the invention, the photonic crystals of each resonator of the device are disposed concentrically, which is the preferred configuration for each resonator, although different configurations can be used in alternative embodiments in which the photonic crystals are disposed radially. The outside radius of each resonator can be defined according to various parameters, with the parameter referring to the wavelength of the working frequency being one of the preferred parameters when establishing the outside radius.

## Description

### OBJECT OF THE INVENTION

The present invention belongs to the field of electrical energy transmission.

The purpose of the invention consists of a device that can supply energy in an efficient and wireless manner.

### BACKGROUND OF THE INVENTION

Traditionally wireless power transfer has been achieved by means of magnetic induction (see US20040000974, US20060061324 and US20050116683). An example of this are transformers made of two winding conductors a small distance apart where an electric current passing through one induces a current in the other. The efficiency of this exchange of power drastically diminishes on increasing the distance between the windings to more than their individual size.

There exists a phenomenon known as resonant coupling, which occurs when a resonant object approaches another resonant element and their respective frequencies are similar. In regard to prior art there are currently other proposals based on this phenomenon:
- Dielectric discs (Karalis & co-authors, 2008). For the construction of these resonators it is necessary to work with materials with high dielectric constant ε values, making implementation difficult. With the solution proposed in this application the maximum dielectric constant values necessary are reduced by a half in order to obtain comparable transfer results. The system based on Radial Photonic Crystals (RPCs) produces coupling factors greater than those obtained with a system of homogenous discs which has as its constituent parameters an average of the RPC profiles.
- Resonant wire loops (details in patent US20100117456). The experimental results demonstrate the possibility of transferring electrical energy between two wire loops of similar dimensions. Energy was successfully transferred over 2m with wire loops of a 25cm radius (D/r=8). The efficiencies obtained using our solution over this distance are initially greater.

### DESCRIPTION OF THE INVENTION

The object of the invention is to produce a device that allows the transfer of electrical energy between two resonators by coupling non-reactive fields.

The device proposed makes use of the phenomenon of resonant coupling to increase efficiency at distances greater than the size of the resonators.

As we already know, resonant coupling occurs when a resonant object approaches another resonant element and their respective frequencies are similar. The device described in this document contains resonant elements or resonators of much superior quality and coupling factors than those proposed in the documents cited in the section above. These resonators contain RPCs and in their internal cavity there is coaxial connector which makes excitation of the resonator possible both when it acts as a source and when it acts as an energy receptor.

In experimental testing the invention device presents efficiencies 50% greater than current existing solutions at a distance 10 times the size of the resonator.

The structures of the radial photonic crystals are composed of four layers of two types of material with thicknesses comprised of between da and db=2da, with a being the first type of material and b the second, with the total radius of the resonators defined as *rext*=4*cm.* The working frequency is 170MHz, but may be adjusted between 10 MHz and 1 GHz for example. The size is inferior to the wave length at the working frequency (*λ*/*r*>40).

An RPC type device is cylindrical in shape and is made up of concentric layers of two types of material (a first material or material type a, and a second material or material type b). These materials have respective thicknesses of dₐ and d_{b} (d_{b} = 2dₐ). The total exterior radius of the multilayer cylinder making up each resonator would preferably be r = 4 cm when the working frequency, at which electrical energy is exchanged, is f = 170 MHz. This frequency value can be adjusted within a scale of between 10 MHz and 1 GHz, depending on the design, also allowing a scaling of the geometric dimensions of the cylindrical structure.

At the working frequency f = 170 MHz, the equivalent wave length is = c/f = 3.10⁸/170.10⁶ = 1.76m, with the relation between the wave length *λ* and the exterior radius of each device r in this case being greater than 40 (*λ*/*r* >40). The resonators work in a quadripolar resonance mode (*Q*=9915).

The resonators have quadripolar type resonance (for example the distribution of electromagnetic energy in a cross section of the cylindrical device presents a pattern with four lobes). These resonances present a high quality factor (with typical values of around 10,000).

In a schematic form, the system is based on the use of two of these same resonators, in such a way that the first acts as a source and the second as a receptor. Both include standard type connectors (for example SMA) to respectively insert or extract the electrical energy of the system.

### DESCRIPTION OF THE FIGURES

To complement this description and to provide a clearer understanding of the essential characteristics of the invention a set of figures have been included. These represent a preferred embodiment of the invention, are intended for illustrative rather than definitive purposes, and show the following:
Figures 1a and 1b.- Show an isometric view of the invention device illustrating the sandwich type ringed structure and the arrangement of its elements. Figure 1 a represents the complete device and figure 1b a diametrical section.
Figure 2.- Shows the basic configuration of the invention making use of the two resonance devices configured in a ring with connectors respectively located in the centre of each one.
Figure 3.- Shows a perspective view of a possible embodiment of the device with each resonator defined as multilayered concentric radial sections. As illustrated this would also be a cylindrical configuration, but of an angular type (includes dielectric and metallic materials).
Figure 4.- Shows a representation of a simulation of electromagnetic resonant coupling between two devices (the electric field in the plan shown in solid colour with the lines representing the magnetic field). The intensity of both fields is demonstrated according to the scale of grays.
Figure 5.- Shows an illustration of a quadripolar resonance (distribution of the field in the device at the working frequency).

### PREFERRED EMBODIMENT OF THE INVENTION

In the light of the figures there follows a description of a preferred embodiment of the wireless energy device, the object of this invention as a system of energy transfer.

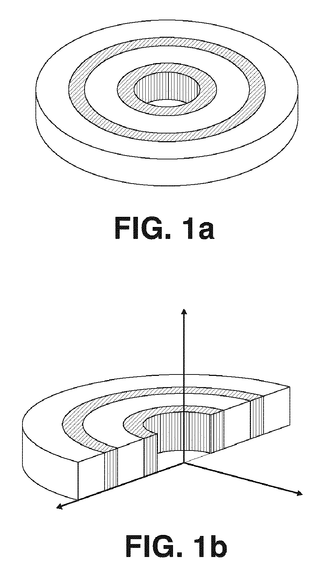

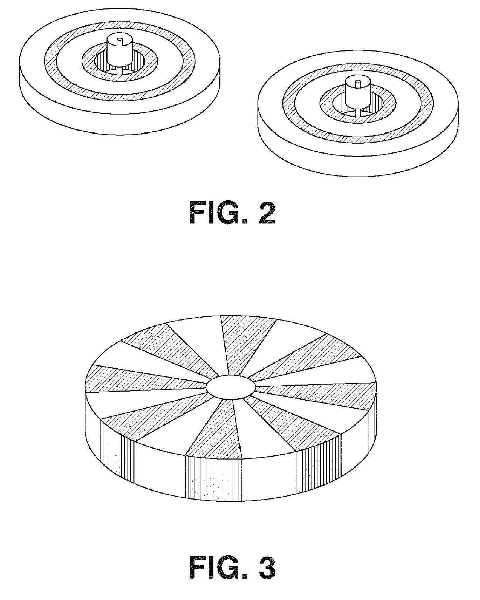

In a preferred embodiment the invention comprises at least two RPC type resonators which in turn comprise photonic crystals with one acting as a source and the other as a receptor. Figure 1 a illustrates an RPC type resonator. Each resonator comprises respective additional connectors which are located in the centre of each of the resonators, as shown in figure 2, which are equipped to allow the excitation of each resonator.

In a preferred embodiment like the one shown in figure 2 the photonic crystals of each resonator may be presented in a concentric radial configuration, while there is also an alternative embodiment shown in figure 3 where they are arranged in an alternating angular radial configuration of layers.

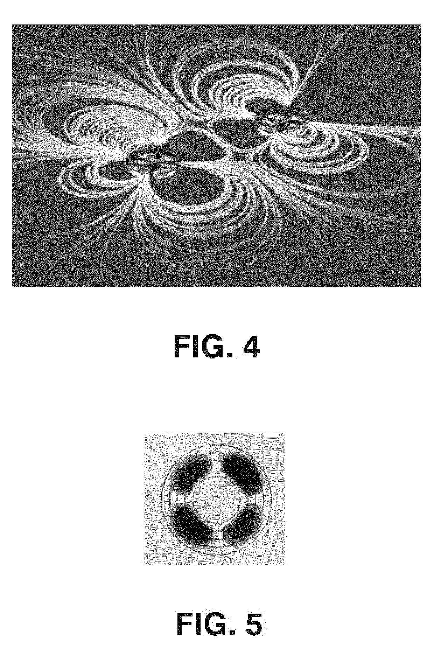

In the preferred embodiment described here the photonic crystals have a ring form, although possible alternative embodiments are envisaged with polygonal photonic crystals which would allow the same effect as shown in figure 4 where use is made of the preferred embodiment described here with photonic crystals in a ring form. In all events the photonic crystals comprise at least four layers, either concentric or in a polar matrix or angular multilayer according to the embodiment, with two different types of material, a first or type a material and a second or type *b* material, with each of the type *a*- *b* layers alternated with respective thicknesses defined by the following relationship: dₐ and d_{b}=2dₐ, as shown in figure 1 b.

The device can function with a working frequency of between 10 MHz and 1 GHz, although in a possible preferred embodiment the radius of each resonator *[rex]* is between 1mm and 100 cm. On this basis it can be highlighted that maintaining the same "electrical size" (for example the relationship with the wave length) the radius of each resonator can be between 68 cm (for *f* = 10 MHz) and 7 mm (for *f* = 1 GHz) with the preferred radius fixed at 4cm for a working frequency fixed at *f =* 170 MHz and the relationship between radius *r* and the wave length at the working frequency (*λ*/*r*>n); where *λ* is wave length at the working frequency and *n*>5.

As seen in figure 4 the resonators generate an electromagnetic resonant coupling between each other.

## Claims

1. A wireless energy transfer device comprising the following:
• At least two resonators in turn comprising photonic crystals, and
• A connector located in the centre of each of these, equipped to allow the excitation of the respective resonator.

2. A wireless energy transfer device according to claim 1, wherein the photonic crystals have a ring form.

3. A wireless energy transfer device according to claims 1 and 2, wherein the photonic crystals comprise at least four concentric layers of two different types of material, a material type *a* and a material type *b.*

4. A wireless energy transfer device according to claim 3, wherein each of the layers of type *a* or *b* is alternated with respective thicknesses dₐ and d_{b;} where d_{b} =2dₐ.

5. A wireless energy transfer device according to claim 1, wherein each resonator has an external radius *r* of between 7mm and 68cm.

6. A wireless energy transfer device according to claim 5, having a working frequency *f* of between 10 MHz and 1 GHz.

7. A wireless energy transfer device according to claim 5, having an exterior radius *r* of each resonator of 4 cm.

8. A wireless energy transfer device according to claim 7, having a working frequency of *f* = 170 MHz.

9. A wireless energy transfer device according to claims 1 to 4, wherein each resonator has an exterior radius r which can be defined via: (*λ*/*r*>n ); where *λ* is the wave length at the working frequency and n>5.
